# NEUE EUROPÄISCHE PATENTSCHRIFT

(11) **EP 1 862 408 B2**
(45) Veröffentlichungstag und Bekanntmachung des Hinweises auf die Entscheidung über den Einspruch: **05.10.2016**
(45) Hinweis auf die Patenterteilung: 28.04.2010
(21) Anmeldenummer: 07108772.0
(22) Anmeldetag: 23.05.2007
(51) Int. Cl.: B65G 1/137, B62B 3/00

(54) **Verfahren zum Kommissionieren von Artikeln in einem Kommissioniersystem und Anordnung hierfür**
Method for picking articles in a picking system and assembly therefor
Procédé destiné au commissionnement d'articles dans un système de commissionnement et agencement correspondant

(30) Priorität: 02.06.2006 DE 102006025937
(43) Veröffentlichungstag der Anmeldung: 05.12.2007
(73) Patentinhaber: Dematic GmbH, 63073 Offenbach am Main (DE)
(72) Erfinder: Stehr, Peter, 63179, Obertshausen (DE)
(74) Vertreter: Moser Götze & Partner Patentanwälte mbB

(56) Entgegenhaltungen:
- DE-A1- 10 340 143
- DE-C1- 3 413 157
- DE-U1- 20 311 674
- DE-U1- 29 513 943
- DE-U1- 29 711 918

## Beschreibung

Die Erfindung betrifft ein Verfahren zum Kommissionieren von Artikeln in einem Kommissioniersystem, in dem Artikel von Kommissionierern manuell in Sammelmitteln eingesammelt und die Sammelmittel von den Kommissionierern in Zwischenlagervorrichtungen während des Kommissioniervorgangs mitgeführt werden.

Kommissioniersysteme, die nach dem Prinzip "Mann zur Ware" arbeiten, sind allgemein bekannt. Hierbei bewegt sich ein Kommissionierer gezielt durch einen Lagerbereich, sammelt Stückgüter beziehungsweise Waren - nachfolgend als Artikel bezeichnet - manuell ein und stellt diese zu einem Auftrag zusammen. Während des Kommissioniervorgangs lagert der Kommissionierer die bereits gesammelten Artikel in einem Sammelmittel zwischen, das auf einem Aufnahmeplatz einer Zwischenlagervorrichtung abgestellt ist. In üblicher Weise ist diese Zwischenlagervorrichtung als Wagen mit einer oder mehreren regalartig angeordneten Aufnahmeflächen ausgebildet. Die Aufnahmeflächen dienen als Aufnahmeplätze für die nebeneinander und/oder hintereinander abgestellten Sammelmittel. Der Wagen kann von Hand geschoben oder auch angetrieben sein. Die Sammelmittel können als Behälter, Kartons, Wannen oder Paletten ausgebildet sein.

Zu Beginn des Kommissioniervorganges werden von dem Kommissionierer geeignete leere Sammelmittel per Hand in die Aufnahmeplätze der Sammelvorrichtung gestellt. Die Wegezeit pro Artikel stellt die entscheidende Größe für die Effektivität des Kommissioniersystems dar. Für eine Erhöhung der Effektivität werden mehrere Kommissionieraufträge zu einem Serienauftrag zusammengefasst, die parallel von einem Kommissionierer bearbeitet werden. Hierdurch wird eine höhere Pickdichte während eines Weges des Kommissionierers erreicht. Bei dieser parallelen Kommissionierung führt der Kommissionierer eine der Anzahl der Kommissionieraufträge entsprechende Anzahl von Sammelmitteln in der Zwischenlagervorrichtung mit. Der Kommissionierer kann hierbei zu Fuß oder mit einer Fahrhilfe den für den Kommissioniervorgang erforderlichen Weg zurücklegen. Am Ende des Kommissioniervorganges wird die Zwischenlagervorrichtung von dem Kommissionierer manuell entleert, d. h. die mit den gesammelten Artikeln befüllten Sammelmittel werden entnommen und an einen weiteren Förderer für den Weitertransport übergeben.

Die Entlade- und Beladevorgänge der Zwischenspeichervorrichtungen erfolgen zumeist an einem als Basis bezeichneten Abschnitt des Kommissionierbereichs. Es kann daher dazu kommen, dass sich mehrere Kommissionierer bei der Entlade- und Beladetätigkeit gegenseitig behindern, so dass die Kommissionierzeit sich erhöht.

Grundsätzlich können die Kommissioniervorgänge auftragsbezogen - auch einstufig genannt - oder artikelbezogen - auch mehrstufig genannt - erfolgen. Auch kann der Lagerbereich ungeteilt oder in mehrere Kommissionierzonen geteilt sein, so dass der Kommissionierer im gesamten Lagerbereich oder nur einem Teil hiervon arbeitet.

Aus dem deutschen Gebrauchsmuster DE 203 11 674 U1 ist ein handgeschobener Kommissionierwagen bekannt, der sich im Wesentlichen dadurch auszeichnet, dass die regalartig übereinander angeordneten Aufnahmeflächen horizontal verschiebbar im Sinne von ausziehbar sind. Hierdurch soll eine manuelle Be- und Entladung der Aufnahmeflächen mit den Sammelmitteln erleichtert werden.

Ausgehend von DE 3413157 C1 liegt der Erfindung die Aufgabe zu Grunde, ein Verfahren zum Kommissionieren von Artikeln in einem Kommissioniersystem zu schaffen, mit dem eine Optimierung der Wegezeit pro Artikel erreicht wird.

Diese Aufgabe wird durch ein Verfahren zum Kommissionieren von Artikeln in einem Kommissioniersystem mit den Merkmalen des Anspruchs 1 gelöst. Vorteilhafte Ausgestaltungen der Erfindung sind in den Ansprüchen 2 bis 9 angegeben.

Erfindungsgemäß wird bei einem Verfahren zum Kommissionieren von Artikeln in einem Kommissioniersystem, in dem Artikel von Kommissionierern manuell in Sammelmitteln eingesammelt und die Sammelmittel von den Kommissionierern in Zwischenlagervorrichtungen während des Kommissioniervorgangs mitgeführt werden, eine Optimierung der Wegezeit pro Artikel dadurch erreicht, dass die Zwischenlagervorrichtung in einer Be- und Entladestation maschinell mit Sammelmitteln beladen wird und/oder die Sammelmittel aus der Zwischenlagervorrichtung in einer Be- und Entladestation maschinell entladen werden. Diese Automatisierung der Be-und/oder Entladevorgänge hat den Vorteil, dass der Kommissionierer hiervon entbunden wird und sofort eines neuen Kommissionierauftrag beginnen kann. Eine Personalbindung ist nicht mehr gegeben.

Eine weitere Optimierung des Verfahrens wird erfindungsgemäß dadurch erreicht, da eine mehrstufige oder mehrzonige Kommissionierung durch geführt wird und die mit kommissionierten Artikeln befüllten Sammelmittel über einen sich an die Be-und Entladestationen anschließenden Lager-/Sortierbereich an eine weitere Be- und Entladestation in einem anderen Kommissionierteilbereich gefördert werden. Gerade bei einer mehrstufigen oder mehrzonigen Kommissionierung wird der Zeitvorteil durch die mehrfachen Be- und Entladevorgänge entsprechend vervielfacht.

Auch übernimmt dabei der Lager-/Sortierbereich erfindungsgemäß bie Funktion eines Zwischenlagers für mit kommissionierten Artikeln befüllten Sammelmitteln zwischen den einzelnen Kommissionierschritten. Somit kann die Auslastung der Kommissionierer in den Kommissionierteilbereichen vergleichmäßigt werden.

Vorteilhaft ist auch, dass die mit kommissionierten Artikeln befüllten Sammelmittel in dem Lager-/Sortierbereich sortiert und über einen Abführförderer zu einem Warenausgang gefördert werden.

Eine weitere Reduzierung der von dem Kommissionierer zurück zulegenden Wege wird dadurch erreicht, dass die Zwischenlagervorrichtungen von einem Zwischenförderer zwischen der Be- und Entladestation und dem Lager-/Sortierbereich transportiert werden.

Vorteilhafter Weise ist vorgesehen, dass die Zwischenlagervorrichtungen mit den Sammelmitteln an einer Übergabestation von einem Kommissionier übernommen oder abgegeben werden.

Durch eine Trennung der Be- und Entladestation von der Übergabestation, so dass die Zwischenlagervorrichtungen von einem Zwischenförderer zwischen der Be- und Entladestation und der Übergabestation transportiert werden müssen, können die Übergabestationen weit in die Kommissionierteilbereiche hinein verlagert werden und die von dem Kommissionierer zurück zulegenden Wege werden weiter reduziert.

Dadurch dass die in ein Lagerteil und ein Fahrteil trennbaren Zwischenlagervorrichtungen vor Übernahme durch den Kommissionierer an einer Übergabestation mit einander verbunden werden und nach Übergabe durch den Kommissionierer an eine Übergabestation von einander getrennt werden, wird erreicht, dass die Lagerteile mit den kommissionierten Artikel getrennt von den Fahrteilen gefördert werden können, wodurch die zu fördernde Last verringert wird. Die ist insbesondere bei Kommissionierteilbereichen in verschiedenen horizontalen Ebenen von Vorteil. In der Teilung der Zwischenlagervorrichtung in ein Lagerteil und ein Fahrteil wird eine eigenständige erfinderische Idee gesehen.

In einer Variante ist vorgesehen, dass die von den Fahrteilen getrennten Lagerteile zwischen den Übergabestationen und den Be- und Entladestationen von einem Förderer transportiert werden.

Auch kann die Auslastung der Kommissionierer in den Kommissionierteilbereichen dadurch vergleichmäßigt werden, dass die von den Fahrteilen getrennten Lagerteile auf dem Weg zwischen den Übergabestationen und den Be- und Entladestationen zwischengelagert werden.

Um die Kommissionierzeit zu minimieren ist vorgesehen, dass die von den Fahrteilen getrennten Lagerteile direkt zwischen den Übergabestationen der verschiedenen Kommissionierteilbereiche weitergefördert werden.

Bei einer Anordnung zum Kommissionieren von Artikeln in einem Kommissioniersystem, mit Aufnahmeplätze aufweisenden Zwischenlagervorrichtungen, wobei in die Aufnahmeplätze Sammelmittel für die zu kommissionierenden Artikel abstellbar sind, wird eine Optimierung der Wegezeit pro Artikel dadurch erreicht, dass die Anordnung mindestens eine Be- und Entladestation aufweist, in der die Zwischenlagervorrichtung maschinell mit Sammelmitteln beladbar und/oder die Sammelmittel aus der Zwischenlagervorrichtung in Be- und Entladestationen maschinell entladbar sind.

In Bezug auf die hiermit verbunden Vorteile wird auf das zuvor beschriebene Verfahren verwiesen.

Die Verfügbarkeit der Zwischenlagervorrichtungen wird dadurch erhöht, dass die Be- und Entladestation über einen Zwischenförderer mit dem Lager-/Sortierbereich verbunden ist und die Be- und Entladestation somit in Richtung des Lagerbereichs mit den zu kommissionierenden Artikeln verlagert ist.

Für eine mehrzonige Kommissionierung sind mehrere Kommissionierteilbereiche vorgesehen, so dass jedem Kommissionierteilbereich mindestens eine Be- und Entladestation zugeordnet ist und die Be- und Entladestation der Kommissionierteilbereiche über einen Lager-/Sortierbereich miteinander verbunden ist.

Dadurch dass die Be- und Entladestation mit Übergabestationen verbunden sind, an denen die Zwischenlagervorrichtungen mit den Sammelmitteln von einem Kommissionierer übernommen oder abgebbar sind, kann der Kommissionierer seine Kommissionieraufgabe in seinem Kommissionierteilbereich anfangen und beenden. Hierbei ist vorteilhafter Weise die Be-und Entladestation über einen Förderer mit der Übergabestation verbunden.

Durch die Trennung kann der Zwischenlagervorrichtung in ein Lagerteil und ein Fahrteil, deren Verbindung vor der Übernahme durch den Kommissionierer an einer Übergabestation und deren Trennung nach der Übergabe durch den Kommissionierer, kann das von dem Gewicht und den Abmessungen des Fahrteils befreite Lagerteil einfacher gehandhabt werden. In der Teilung der Zwischenlagervorrichtung in ein Lagerteil und ein Fahrteil wird eine eigenständige erfinderische Idee gesehen.

Die Kommissionierzeit kann dadurch minimiert werden, dass die Übergabestationen verschiedener Kommissionierteilbereiche über einen Förderer direkt verbunden sind.

Nachfolgend wird die Erfindung an Hand eines in einer Zeichnung dargestellten Ausführungsbeispiels näher erläutert. Es zeigen:
Figur 1 eine schematische Ansicht eines Kommissioniersystems mit Be- und Entladstationen für Zwischenlagervorrichtungen,
Figur 2 eine Ansicht einer Zwischenlagervorrichtung für Artikel und
Figur 3 eine Ansicht einer Zwischenlagervorrichtung, die in ein Lagerteil und ein Fahrteil getrennt ist.

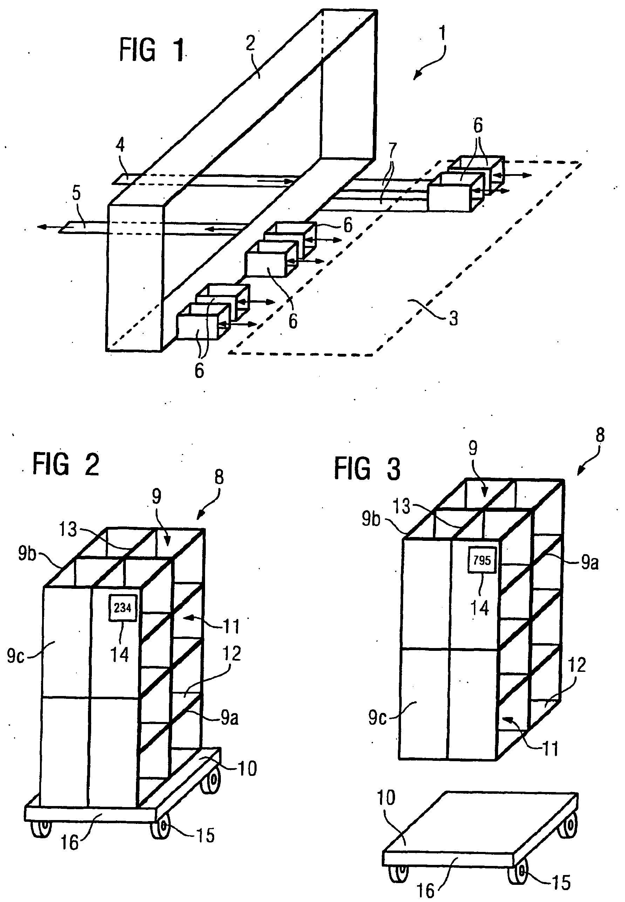

Die Figur 1 zeigt eine schematische Ansicht eines insgesamt mit 1 bezeichneten Kommissioniersystems, das einen Lager-/Sortierbereich 2 und einen hieran angrenzenden Kommissionierbereich 3 aufweist, der einen Lagerbereich für die zu kommissionierenden Artikel umfasst.

In dem Lager-/Sortierbereich 2 sind die bereits kommissionierten beziehungsweise bereits teilkommissionierten Artikel zwischengelagert und werden dort für die weiteren Verfahrensschritte sortiert. Diese Artikel ruhen in nicht dargestellten Sammelmitteln, die als Behälter, Kartons, Wannen oder Paletten ausgebildet sind. Auf der dem Kommissionierbereich 3 abgewandten Seite ist der Lager-/Sortierbereich 2 mit einem Zuführförderer 4 und einem Abführförderer 5 verbunden. Der Zuführförderer 4 und der Abführförderer 5 sind als Rollenbahn oder Bandförderer ausgebildet und dienen einerseits zur Versorgung des Lager-/Sortierbereichs 2 mit leeren Sammelmitteln und andererseits zum Abziehen der mit kommissionierten Artikeln befüllten Sammelmittel.

Auf der dem Zuführförderer 4 und dem Abführförderer 5 gegenüberliegenden Seite ist der Lager-/Sortierbereich 2 über mehrere Be- und Entladestationen 6 mit dem Kommissionierbereich 3 verbunden. Diese Be- und Entladestationen 6 können direkt an den Lager-/Sortierbereich 2 angeschlossen oder über Zwischenförderer 7 mit dem Lager-/Sortierbereich 2 verbunden sein. Je nach Ausgestaltung des Kommissionierbereiches 3 und des daran angrenzenden Lagerbereiches für die zu kommissionierenden Artikel können die Be- und Entladestationen 6 entsprechend in einer oder mehreren Ebenen übereinander sowie innerhalb der Ebenen nebeneinander angeordnet sein.

Die Aufgabe der Be- und Entladestationen 6 ist es, die in den Figuren 2 und 3 dargestellten Zwischenlagervorrichtungen 8 automatisch mit leeren Sammelmitteln zu beladen, die der Be-und Entladestation 6 von dem Lager-/Sortierbereich 2 zugeführt worden sind, oder automatisch die Zwischenlagervorrichtungen 8 von den mit kommissionierten Artikeln befüllten Sammelmitteln zu entleeren, die anschließend an den Lager-/Sortierbereich 2 übergeben werden.

Den Figuren 2 und 3 ist der Aufbau der Zwischenlagervorrichtung 8 näher zu entnehmen. Die Zwischenlagervorrichtung 8 besteht im Wesentlichen aus einem regalartigen Lagerteil 9 und einen wagenartigen Fahrteil 10.

Das Lagerteil 9 ist schrankförmig und weist an seiner Vorderseite 9a und an seiner Rückseite 9b mehrere Aufnahmeplätze 11 auf, die rasterartig in zwei Spalten nebeneinander und vier Zeilen übereinander angeordnet sind. Die Zwischenlagervorrichtung 8 weist somit insgesamt sechzehn Aufnahmeplätze 11 auf. Jeder Aufnahmeplatz 11 hat eine Aufnahmefläche 12, die den Boden des Aufnahmeplatzes 11 bildet und eine Rückwand. Auch können Anstellplätze 11 nur an der Vorderseite 9a oder an der Rückseite 9b vorgesehen sein. Somit ist jeder Aufnahmeplatz 11 nur zur Vorderseite 9a beziehungsweise zur Rückseite 9b des Lagerteils 9 offen.

Außerdem ist an einer Seitenwand 9c des Lagerteils 9 ein Kennzeichen 14, insbesondere in Form einer eindeutigen Zahl, angeordnet, um die Lagerteile 9 voneinander unterscheiden zu können.

Das Fahrteil 10 besteht im Wesentlichen aus vier Rollen 15 und einer Grundplatte 16. Von der Grundplatte 16 wird das Lagerteil 9 aufgenommen und dort befestigt. In dem befestigten Zustand ist dann das Lagerteil 9 von Hand oder angetrieben für den Kommissioniervorgang durch den Kommissionierer durch die Gänge des Lagers des Kommissionierbereichs 3 verfahrbar. Das Lagerteil 9 kann auch fest mit dem Fahrteil 10 verbunden sein.

Anschließend wird an Hand der Figuren 1 bis 3 die Funktionsweise des Kommissioniersystems 1 näher erläutert.

Zu Beginn eines Kommissioniervorganges sucht der Kommissionierer eine Be- und Entladestation 6 auf und nimmt dort eine Zwischenlagervorrichtung 8 in Empfang, deren Aufnahmeplätze 11 bereits mit leeren Sammelmitteln von der Be- und Entladestation 6 automatisch gefüllt worden sind. Hierbei befindet sich die Zwischenlagervorrichtung 8 in einer Übergabestation 17, die Bestandteil der Be- und Entladestation 6 sein kann. Diese leeren Sammelmittel sind zuvor aus dem Lager-/Sortierbereich 2 der Be- und Entladestation 6 zugeführt worden. Die so mit leeren Sammelmitteln gefüllte Zwischenlagervorrichtung 8 wird von dem Kommissionierer aus der Übergabestation 17 der Be- und Entladestation 6 herausgerollt und dann von dem Kommissionierer für den Kommissioniervorgang in den Lagerbereich mit den zu kommissionierenden Artikeln gefahren. Bei dieser Vorgehensweise weist die Zwischenlagervorrichtung 8 fest mit dieser verbundene Rollen 15 auf und ist nicht in ein Lagerteil 9 und ein Fahrteil 10 trennbar.

Für den Fall, dass - wie in den Figuren 2 und 3 gezeigt - das Lagerteil 9 der Zwischenlagervorrichtung 8 von dessen Fahrteil 10 trennbar ist, kann das Fahrteil 10 von dem Kommissionierer zu der Be- und Entladestation 6 mitgeführt werden und dort unter das Lagerteil 9 in der Übergabestation 17 oben werden. In der Übergabestation 17 der Be- und Entladestation 6 erfolgt dann das Absenken des Lagerteils 9 auf das Fahrteil 10 und dessen Befestigung hieran. Anschließend wird die Zwischenlagervorrichtung 8 von dem Kommissionierer aus der Übergabestation 17 übernommen.

In einer Variante ist die Be- und Entladestation 6 auf der dem Lager-/Sortierbereich 2 abgewandten Seite mit einem Transferförderer verbunden und transportiert die gesamte Zwischenlagervorrichtung 8 oder dessen Lagerteil 9 in den Lagerbereich für die zu kommissionierenden Artikel, so dass der Kommissionierer die Zwischenlagervorrichtung 8 oder dessen Lagerteil 9 an einer am Ende dieses Linearförderers vorgesehenen Übergabestation 17 in Empfang nehmen kann und sich den Weg aus dem Lagerbereich heraus bis zurück zur nächsten Be- und Entladestation 6 spart. Die Wegezeit pro Artikel wird somit minimiert; der Kommissionierer kann sich voll auf seine Kommissionieraufträge konzentrieren. Der Transferförderer kann als Stetigförderer, fahrerloses Transportsystem oder Elektrohängebahn ausgebildet sein.

Nachdem der Kommissionierer die Zwischenlagervorrichtung 8 von einer Übergabestation 17 in Empfang genommen hat, sammelt er parallel die Artikel zu seinen Kommissionieraufträgen in den mitgeführten Sammelmitteln, bis die Gruppe von Kommissionieraufträgen abgearbeitet ist. Anschließend kehrt er zu einer Übergabestation 17 zurück und gibt dort die gesamte Zwischenlagervorrichtung 8 oder nur dessen Lagerteil 9 ab. Dann übernimmt der Kommissionierer von einer weiteren Übergabestation 17 die nächste bereit gestellte Zwischenlagervorrichtung 8 oder das nächste bereit gestellte Lagerteil 9 mit leeren oder teilkommissionierten Sammelmitteln für einen weiteren Kommissioniervorgang.

Da die Übergabestationen 17 mit dem Lager-/ Sortierbereich 2 verbunden sind, kann auch einfach eine mehrzonige Kommissionierung verwirklicht werden. Das mit den aus einem Teilbereich des Lagerbereichs für die zu kommissionierenden Artikel befüllte Sammelmittel wird in der Be- und Entladestation 6 von der Zwischenlagervorrichtung 8 getrennt, in den Lager-/Sortierbereich 2 gefördert und von dort an eine weitere Be- und Entladestation 6 transportiert, die einem weiteren Teilbereich des Lagerbereichs für die zu kommissionierenden Artikel zugeordnet ist. Hier kann dann die Kommissionierung weitergeführt oder komplettiert werden.

Auch Können diese teilgefüllten Sammelmittel ein zeitlang in dem Lager-/Sortierbereich 2 zwischengespeichert werden, bis in dem gewünschten Teilbereich des Lagerbereichs für die zu kommissionierenden Artikel eine ausreichende Kommissionierkapazität vorhanden ist.

Außerdem kann vorgesehen werden, dass die Zwischenlagervorrichtung 8 oder deren Lagerteil 9 mit teilbefüllten Sammelmitteln an der Übergabestation 17 insgesamt von einem Förderer übernommen wird und bei einer mehrzonigen Kommissionierung von dem Förderer direkt an eine weitere Übergabestation 17 in einem anderen Teilbereich des Lagerbereichs für die zu kommissionierenden Artikel weitergereicht wird. Der Lager-/Sortierbereich 2 wird hierbei umgangen.

In der Ausführung der Zwischenlagervorrichtung 8 mit einem Lagerteil 9 und einem Fahrteil 10, kann das relativ einfach ausgestaltete Lagerteil 9 auch als Zwischenpuffer dienen, in dem es im Bereich einer Übergabestation 17 auf dem Weg zu einer weiteren Übergabestation 17 oder einer Be- und Entladestation 6 zwischengelagert wird. Auch kann das Lagerteil 9 leichter in mehrzonigen und mehretagigen Kommissionierbereichen 3 zwischen den einzelnen Ebenen transportiert werden als eine komplette Zwischenlagervorrichtung 8.

## Patentansprüche

1. Verfahren zum Kommissionieren von Artikeln in einem Kommissioniersystem, in dem Artikel von Kommissionierern manuell in Sammelmitteln eingesammelt und die Sammelmittel von den Kommissionierern in Zwischenlagervorrichtungen während des Kommissioniervorgangs mitgeführt werden, wobei die Zwischenlagervorrichtung (8) in einer Be- und Entladestation (6) maschinell mit Sammelmitteln beladen wird und/oder die Sammelmittel aus der Zwischenlagervorrichtung (8) in einer Be- und Entladestation (6) maschinell entladen werden, und eine mehrstufige oder mehrzonige Kommissionierung durchgeführt wird und **dadurch gekennzeichnet, dass** die mit kommissionierten Artikeln befüllten Sammelmittel über einen sich an die Be- und Entladestationen (6) anschließenden Lager-/Sortierbereich (2) an eine weitere Be- und Entladestation (6) in einem anderen Kommissionierteilbereich gefördert werden und dass die mit kommissionierten Artikeln befüllten Sammelmittel vor dem nächsten Kommissionierschritt in dem Lager-/Sortierbereich (2) zwischengelagert werden.

2. Verfahren nach Anspruch 1, **dadurch gekennzeichnet, dass** die mit kommissionierten Artikeln befüllten Sammelmittel in dem Lager-/Sortierbereich (2) sortiert und über einen Abführförderer (5) zu einem Warenausgang gefördert werden.

3. Verfahren nach einem der Ansprüche 1 oder 2, **dadurch gekennzeichnet, dass** die Zwischenlagervorrichtungen (8) von einem Zwischenförderer (7) zwischen der Be-und Entladestation (6) und dem Lager-/Sortierbereich (2) transportiert werden.

4. Verfahren nach einem der Ansprüche 1 bis 3, **dadurch gekennzeichnet, dass** die Zwischenlagervorrichtungen (8) mit den Sammelmitteln an einer Übergabestation (17) von einem Kommissionierer übernommen oder abgegeben werden.

5. Verfahren nach Anspruch 4, dadurch dass die Zwischenlagervorrichtungen (8) von einem Zwischenförderer (7) zwischen der Be- und Entladestation (6) und der Übergabestation (17) transportiert werden.

6. Verfahren nach einem der Ansprüche 1 bis 5, **dadurch gekennzeichnet, dass** die in ein Lagerteil (9) und ein Fahrteil (10) trennbaren Zwischenlagervorrichtungen (8) vor Übernahme durch den Kommissionierer an einer Übergabestation (17) mit einander verbunden werden und nach Übergabe durch den Kommissionierer an eine Übergabestation (17) von einander getrennt werden.

7. Verfahren nach Anspruch 6, **dadurch gekennzeichnet, dass** die von den Fahrteilen (10) getrennten Lagerteile (9) zwischen den Übergabestationen (17) und den Be- und Entladestationen (6) von einem Förderer transportiert werden.

8. Verfahren nach Anspruch 6 oder 7, **dadurch gekennzeichnet, dass** die von den Fahrteilen (10) getrennten Lagerteile (9) auf dem Weg zwischen den Übergabestationen (17) und den Be- und Entladestationen (6) zwischengelagert werden.

9. Verfahren nach einem der Ansprüche 6 oder 8, **dadurch gekennzeichnet, dass** die von den Fahrteilen (10) getrennten Lagerteile (9) direkt zwischen den Übergabestationen (17) der verschiedenen Kommissionierteilbereiche weitergefördert werden.

## Claims

1. Method for picking articles in a picking system, wherein articles are collected manually in collection means by pickers and the collection means are carried along by the pickers in intermediate storage devices during the picking process, wherein the intermediate storage device (8) is loaded with collection means by machine in a loading and unloading station (6), and/or the collection means are unloaded by machine from the intermediate storage device (8) in a loading and unloading station (6), and a multiple-stage or multiple-zone picking is performed, **characterised in that** the collection means filled with picked articles are conveyed via a storing/sorting region (2), connected to the loading and unloading stations (6), to a further loading and unloading station (6) in another picking partial region and that the collection means filled with picked articles are intermediately stored in the storing/sorting region (2) prior to the next picking step.

2. Method as claimed in Claim 1, **characterised in that** the collection means filled with picked articles are sorted in the storing/sorting region (2) and are conveyed via an output conveyor (5) to an outgoing goods area.

3. Method as claimed in Claim 1 or 2, **characterised in that** the intermediate storage devices (8) are transported by an intermediate conveyor (7) between the loading and unloading station (6) and the storing/sorting region (2).

4. Method as claimed in any one of Claims 1 to 3, **characterised in that** the intermediate storage devices (8) having the collection means are received or delivered at a transfer station (17) by a picker.

5. Method as claimed in Claim 4, **characterised in that** the intermediate storage devices (8) are transported by an intermediate conveyor (7) between the loading and unloading station (6) and the transfer station (17).

6. Method as claimed in any one of Claims 1 to 5, **characterised in that** the intermediate storage devices (8), which can be separated into a storage part (9) and a travelling part (10), are connected together prior to being received by the picker at a transfer station (17) and are separated from each other after being transferred by the picker to a transfer station (17).

7. Method as claimed in Claim 6, **characterised in that** the storage parts (9) separated from the travelling parts (10) are transported by a conveyor between the transfer stations (17) and the loading and unloading stations (6).

8. Method as claimed in Claim 6 or 7, **characterised in that** the storage parts (9) separated from the travelling parts (10) are intermediately stored on the path between the transfer stations (17) and the loading and unloading stations (6).

9. Method as claimed in one of Claims 6 or 8, **characterised in that** the storage parts (9) separated from the travelling parts (10) are further conveyed directly between the transfer stations (17) of the different picking partial regions.

## Revendications

1. Procédé de commissionnement d'articles dans un système de commissionnement, dans lequel des articles sont collectés de façon manuelle par des commissionnaires dans des moyens de collecte et les moyens de collecte sont transportés par les commissionnaires dans des dispositifs d'entreposage pendant le processus de commissionnement, le dispositif d'entreposage (8) étant chargé automatiquement avec les moyens de collecte dans une station de chargement et déchargement (6), et/ou les moyens de collecte étant déchargés automatiquement hors du dispositif d'entreposage (8) dans une station de chargement et déchargement (6), et un commissionnement à plusieurs niveaux ou plusieurs zones étant effectué, **caractérisé en ce que** les moyens de collecte remplis d'articles commissionnés sont convoyés vers une station de chargement et déchargement (6) supplémentaire dans une autre zone de partie de commissionnement, par l'intermédiaire d'une zone de stockage/tri (2) raccordée aux stations de chargement et déchargement (6) et **en ce que** les moyens de collecte remplis d'articles commissionnés sont entreposés dans la zone de stockage/tri (2) avant l'étape suivante de commissionnement.

2. Procédé selon l'une des revendications 1, **caractérisé en ce que** les moyens de collecte remplis d'articles commissionnés sont triés dans la zone de stockage/tri (2) et sont convoyés vers une sortie de marchandises, par l'intermédiaire d'un convoyeur d'évacuation (5).

3. Procédé selon l'une des revendications 1 ou 2, **caractérisé en ce que** les dispositifs d'entreposage (8) sont transportés par un convoyeur intermédiaire (7) entre la station de chargement et déchargement (6) et la zone de stockage/tri (2).

4. Procédé selon l'une des revendications 1 à 3, **caractérisé en ce que** les dispositifs d'entreposage (8) sont reçus ou fournis, avec les moyens de collecte, par un commissionnaire au niveau d'une station de remise (17).

5. Procédé selon la revendication 4, **caractérisé en ce que** les dispositifs d'entreposage (8) sont transportés par un convoyeur intermédiaire (7) entre la station de chargement et déchargement (6) et la station de remise (17).

6. Procédé selon l'une des revendications 1 à 5, **caractérisé en ce que** les dispositifs d'entreposage (8), séparables en une partie de stockage (9) et une partie de transport (10), sont reliés mutuellement au niveau d'une station de remise (17) avant réception par le commissionnaire et, après remise par le commissionnaire, sont séparés les uns des autres au niveau d'une station de remise (17).

7. Procédé selon la revendication 6, **caractérisé en ce que** les parties de stockage (9) séparées des parties de transport (10) sont transportés par un convoyeur entre la station de remise (17) et la station de chargement et déchargement (6).

8. Procédé selon la revendication 6 ou 7, **caractérisé en ce que** les parties de stockage (9) séparées des parties de transport (10) sont entreposées sur le chemin entre les stations de remise (17) et les stations de chargement et déchargement (6).

9. Procédé selon l'une des revendications 6 ou 8, **caractérisé en ce que** les parties de stockage (9) séparées des parties de transport (10) sont convoyées directement entre les stations de remise (17) des différentes zones de partie de commissionnement.
